# EUROPÄISCHE PATENTSCHRIFT

(11) **EP 2 561 336 B1**
(45) Veröffentlichungstag und Bekanntmachung des Hinweises auf die Patenterteilung: **30.07.2014**
(21) Anmeldenummer: 11716866.6
(22) Anmeldetag: 15.04.2011
(51) Int. Cl.: G01N 21/64, G02B 21/00

(54) **BESTIMMEN DER VERTEILUNG EINER SUBSTANZ DURCH ABTASTEN MIT EINER MESSFRONT**
DETERMINATION OF THE DISTRIBUTION OF A SUBSTANCE BY SCANNING WITH A MEASURING FRONT
DÉTERMINATION DE LA DISTRIBUTION D'UNE SUBSTANCE PAR ANALYSE AVEC UN FRONT DE MESURE

(30) Priorität: 22.04.2010 DE 102010028138
(43) Veröffentlichungstag der Anmeldung: 27.02.2013
(73) Patentinhaber: Max-Planck-Gesellschaft zur Förderung der Wissenschaften e.V., 80539 München (DE)
(72) Erfinder: HELL, Stefan, W., 37085 Göttingen (DE)
(74) Vertreter: REHBERG HÜPPE + PARTNER
(86) Internationale Anmeldenummer: PCT/EP2011/056058
(87) Internationale Veröffentlichungsnummer: WO 2011/131591

(56) Entgegenhaltungen:
- DE-A1-102005 034 443
- US-A1- 2007 206 278
- US-A1- 2009 294 694
- GISKE A ET AL: "New developments in STED Microscopy", PROCEEDINGS OF THE SPIE - THE INTERNATIONAL SOCIETY FOR OPTICAL ENGINEERING SPIE - THE INTERNATIONAL SOCIETY FOR OPTICAL ENGINEERING USA, Bd. 7578, 24. Januar 2010 (2010-01-24), - 28. Januar 2010 (2010-01-28), XP002653265, ISSN: 0277-786X
- BRETSCHNEIDER S ET AL: "Breaking the diffraction barrier in fluorescence microscopy by optical shelving", PHYSICAL REVIEW LETTERS APS USA, Bd. 98, Nr. 21, 25. Mai 2007 (2007-05-25), Seiten 218103/1-4, XP002653266, ISSN: 0031-9007
- TINNEFELD P ET AL: "Optical switches: Key molecules for improved fluorescence imaging and tracking with high optical resolution", PROGRESS IN BIOMEDICAL OPTICS AND IMAGING - PROCEEDINGS OF SPIE - BIOPHOTONICS 2007: OPTICS IN LIFE SCIENCE 2007 SPIE US, Bd. 6633, 2007, XP002653267,

## Beschreibung

### TECHNISCHES GEBIET DER ERFINDUNG

Die Erfindung bezieht sich auf Verfahren zum Bestimmen der Verteilung einer Substanz in einem Messgebiet, wobei die Substanz mittels eines optischen Signals (a) aus einem Zustand, in dem kein Messsignal von ihr erhältlich ist, in einen Messzustand überführbar ist, in dem ein Messsignal von ihr erhältlich ist, und/oder mittels desselben optischen Signals oder eines anderen optischen Signals (b) in den einen oder einen weiteren Zustand überführbar ist, in dem kein Messsignal von ihr erhältlich ist. Weiterhin bezieht sich die vorliegende Erfindung auf ein Rasterlichtmikroskop zur Durchführung eines solchen Verfahrens. Zudem bezieht sich die vorliegende Erfindung auf ein Verfahren zum lokalisierten Auslösen einer Umwandlung einer Substanz in einem Umwandlungsgebiet, wobei die Substanz mittels eines optischen Signals (a) aus einem nichtreaktiven Zustand, in dem die Umwandlung mit einem physikalischen Signal nicht auslösbar ist, in einen reaktiven Zustand überführbar ist, in dem die Umwandlung mit dem physikalischen Signal auslösbar ist, und mittels desselben optischen Signals oder eines anderen optischen Signals (b) in den einen oder einen weiteren nichtreaktiven Zustand überführbar ist.

Das Überführen (b) in den einen oder einen weiteren Zustand, in dem kein Messsignal von ihr erhältlich ist, bzw. in den einen oder einen weiteren nichtreaktiven Zustand kann aus dem Messzustand bzw. dem reaktiven Zustand oder aus dem einen Zustand heraus erfolgen.

Bei der interessierenden Verteilung der Substanz in dem Messgebiet kann es sich um eine mit der Substanz markierte Struktur in einer Probe handeln, wobei eine Abbildung der Struktur von Interesse ist. Mittels der Verteilung kann aber beispielsweise auch eine Information in einem Datenträger codiert sein, wobei diese Information ausgelesen werden soll. Generell schließt die Angabe "Verteilung der Substanz" nicht nur die Bedeutung einer Verteilung der Substanz als solche sondern auch die Bedeutung einer Verteilung eines bestimmten dauerhaften Basiszustands der Substanz, beispielsweise einen stabilen Konformationsbasiszustand, ein, der sich während des Bestimmens der Verteilung nicht ändert.

Der Begriff Gebiet bzw. Messgebiet oder Umwandlungsgebiet bezeichnet ein in einer, zwei oder drei Dimensionen ausgedehntes Gebiet, wobei ein in nur einer oder zwei Dimensionen ausgedehntes Gebiet in der zweiten und dritten bzw. in der dritten Raumrichtung so kleine Abmessungen aufweist oder es andere Gründe gibt, dass die Auflösung der Verteilung in diesen Richtungen/dieser Richtung nicht möglich oder nicht von Interesse ist.

Bei dem Messzustand der Substanz kann es sich um einen gegenüber dem einen Zustand angeregten elektronischen Zustand der Substanz handeln, aus dem heraus die Substanz spontan Lumineszenzlicht, wie insbesondere Fluoreszenzlicht, emittiert. Das optische Signal ist dann Anregungslicht, das die Substanz aus dem energetisch tiefer liegenden einen Zustand in den Messzustand überführt. Aus dem elektronisch angeregten lumineszierenden Zustand kann die Substanz zum Beispiel durch das Anregungslicht selbst oder durch ein weiteres optisches Signal in einen Dunkelzustand, beispielsweise einen Triplett-Zustand, überführt oder durch Stimulationslicht in ihren einen oder einen anderen energetisch tiefer liegenden Zustand zurückgeführt werden, aus dem heraus keine spontane Emission von Lumineszenzlicht mehr möglich ist. Zu der Gruppe von Substanzen mit derartigen Eigenschaften zählen insbesondere alle herkömmlichen Fluoreszenzfarbstoffe aber auch andere lumineszente Substanzen.

Bei dem Messzustand der Substanz kann es sich aber auch um einen Konformationszustand oder einen anderen Zustand der Substanz handeln, aus dem heraus sie überhaupt durch Anregungslicht zur Emission von Lumineszenzlicht oder zur Bereitstellung irgendeines anderen optischen Messsignals anregbar ist, während der eine Zustand ein Konformationszustand oder ein anderer Zustand der Substanz ist, in dem das betrachtete Messsignal auch nach Anregung nicht oder zumindest nicht in nennenswertem Ausmaß zur Verfügung steht. Bei dem weiteren Zustand der Substanz kann es sich in diesem Fall sowohl um einen weiteren Konformationszustand als auch um einen sich von dem Messzustand im Wesentlichen elektronisch unterscheidenden Dunkelzustand handeln. Zu diesen Substanzen zählen insbesondere alle sogenannten schaltbaren Fluoreszenzfarbstoffe, schaltbaren fluoreszierenden Proteine und aktivierbaren Lumineszenzpartikel.

Entsprechend kann es sich bei dem reaktiven Zustand der Substanz um einen Konformationszustand oder einen elektronischen oder chemischen Zustand der Substanz handeln, aus dem heraus sie durch ein physikalisches Signal zu der gewünschten Umwandlung anregbar ist, während jeder nichtreaktive Zustand der Substanz ein Konformationszustand oder ein elektronischer oder chemischer Zustand ist, aus dem heraus diese Umwandlung nicht oder zumindest nicht in nennenswertem Ausmaß erfolgt, selbst wenn das physikalische Signal vorliegt. Die Umwandlung führt dabei zu einem dauerhaften oder zumindest vorübergehend stabilen, d. h. anhaltenden anderen Zustand der Substanz, der jedoch reversibel, das heißt in den reaktiven oder nichtreaktiven Ausgangszustand der Substanz zurückführbar sein kann.

Unabhängig von der Substanz und der konkreten Anwendung geht es bei der vorliegenden Erfindung darum, die wellenlängenabhängige Beugungsgrenze mit der räumlichen Auflösung beim Bestimmen der Verteilung der Substanz bzw. beim lokalisierten Auslösen der Umwandlung der Substanz zu überwinden, d. h., eine räumliche Auflösung zu erreichen, die besser als die Beugungsgrenze ist.

### STAND DER TECHNIK

Als Verfahren zum Überwinden der Beugungsgrenze mit der räumlichen Auflösung beim Abbilden einer mit einem Fluoreszenzfarbstoff markierten Struktur in einer Probe sind die STED- und GSD-Fluoreszenzlichtmikroskopie bekannt. Bei der STED-Fluoreszenzlichtmikroskopie wird der räumliche Bereich, aus dem Fluoreszenzlicht von einer Probe spontan emittiert wird, gegenüber den beugungsbegrenzten Abmessungen eines fokussierten Anregungslichtstrahls dadurch reduziert, dass die Intensitätsverteilung des Anregungslichtstrahls in der Probe mit einer Intensitätsverteilung von Stimulationslicht überlagert wird, die an einem Messpunkt eine Nullstelle und hieran angrenzend eine so hohe Intensität aufweist, dass der Fluoreszenzfarbstoff aus seinem elektronisch angeregten fluoreszierenden Zustand durch stimulierte Emission in einen energetisch tiefer liegenden, nicht fluoreszierenden elektronischen Zustand überführt wird. Der Messpunkt wird so durch einen Bereich eingerahmt, aus dem aufgrund der Intensität des Stimulationslichts kein spontan emittiertes Fluoreszenzlicht mehr stammen kann. Bei der GSD-Fluoreszenzlichtmikroskopie wird die räumliche Einengung des Bereichs der Probe, aus dem das spontan emittierte Fluoreszenzlicht stammen kann, dadurch erreicht, dass der Fluoreszenzfarbstoff außerhalb des Messpunkts entweder direkt aus seinem Grundzustand oder aus seinem elektronisch angeregten fluoreszierenden Zustand mit einem optischen Signal in einen Dunkelzustand überführt wird, aus dem der Fluoreszenzfarbstoff zumindest für die Dauer der Messung des Messpunkts nicht mehr heraus gelangt, so das durch Entvölkerung seines Grundzustand keine Anregung des Fluoreszenzfarbstoffs zur spontanen Emission von Fluoreszenzlicht mehr möglich ist. Dabei ist die Intensitätsverteilung des den Grundzustand des Fluoreszenzfarbstoffs entvölkernden optischen Signals grundsätzlich dieselbe wie diejenige des Stimulationslichts bei der STED-Fluoreszenzlichtmikroskopie. Das bedeutet, dass beim Abtasten einer Probe mit dem eigentlichen Messpunkt jedes Molekül des Fluoreszenzfarbstoffs, bevor es von dem Messpunkt erreicht wird, ganz erheblichen Intensitäten des Anregungslichts und des Stimulationslichts bzw. des den Grundzustand des Fluoreszenzfarbstoffs entvölkernden optischen Signals ausgesetzt war und entsprechend eine große Anzahl von Überführungszyklen durchlaufen hat. Dies ist mit einer erheblichen Gefahr des zumindest vorübergehenden Bleichens des Fluoreszenzfarbstoffs verbunden. Dieser Gefahr kann zwar durch Unterbrechungen des jeweiligen optischen Signals reduziert werden. Hierdurch wird aber die Messdauer verlängert. Obwohl viele auch sehr empfindliche Fluoreszenzfarbstoffe zumindest einige wenige Male aus einem Dunkelzustand in ihren zur Fluoreszenz anregbaren Grundzustand zurückkehren, sind sie aus den voranstehenden Gründen für die hochauflösende STED- und GSD-Fluoreszenzlichtmikroskopie nicht geeignet.

Um bei der Anwendung der Prinzipien der STED- und GSD-Fluoreszenzlichtmikroskopie mit weniger hohen Lichtintensitäten auszukommen und dadurch die Gefahr des Bleichens des Fluoreszenzfarbstoffs zu reduzieren, werden in der sogenannten RESOLFT-Fluoreszenzlichtmikroskopie schaltbare Fluoreszenzfarbstoffe verwendet, die zwischen Konformationszuständen mit unterschiedlichen Fluoreszenzeigenschaften überführbar sind. Diese Konformationszustände weisen eine größere Lebensdauer als die bei einfachen Fluoreszenzfarbstoffen in der STED- und GSD-Fluoreszenzlichtmikroskopie allein nutzbaren elektronischen Zustände auf. Die grundsätzliche Problematik, dass ein einzelnes Molekül des Fluoreszenzfarbstoffs bereits mit erheblichen Lichtintensitäten beaufschlagt wurde und entsprechend vielen Zustandsänderungen in kurzer Zeit unterworfen wurde, bevor es von dem eigentlichen Messpunkt erreicht wird, ist aber auch hier gegeben. Hinzu kommt, dass die Auswahl an schaltbaren Fluoreszenzfarbstoffen trotz erheblicher Entwicklungsanstrengungen immer noch begrenzt ist, und selbst viele der verfügbaren schaltbaren Fluoreszenzfarbstoffe nicht so häufig beschädigungsfrei schaltbar sind, wie es in der STED- oder GSD-Fluoreszenzlichtmikroskopie bei der Annäherung des Messpunkts an ein einzelnes Farbstoffmolekül nötig ist. So ist die begrenzte Anzahl der möglichen Zustandsänderungen der Fluoreszenzfarbstoffe in kurzer Zeit der limitierende Faktor bei allen bisher bekannten hochauflösenden Lichtrastermikroskopieverfahren (vergl. Hell, SW, "Microscopy and its focal switch", Nature Methods, Vol. 6 (2009), Seite 28, rechts, § 4).

Neben den bis hierher beschriebenen Verfahren zum Überwinden der Beugungsgrenze mit der räumlichen Auflösung beim Abbilden einer mit einem Fluoreszenzfarbstoff markierten Struktur in einer Probe, bei denen der räumliche Bereich einer Probe, aus dem das Messsignal stammen kann, eingeschränkt wird, gibt es Verfahren, die unter den Stichworten PALM und STORM bekannt sind und bei denen gezielt immer nur ein so kleiner Anteil der Moleküle der die Struktur markierenden Substanz in einen fluoreszenzfähigen Zustand aktiviert und in diesem Zustand mit Anregungslicht zur Emission von Fluoreszenzlicht angeregt wird, dass das Fluoreszenzlicht von der Probe einzelnen Molekülen des Fluoreszenzfarbstoffs zugeordnet werden kann. So ist über die relative Intensitätsverteilung des Fluoreszenzlichts über mehrere Pixel eines das Fluoreszenzlicht erfassenden zweidimensionalen Detektorarrays die Lage jedes fluoreszierenden Moleküls in der Probe mit einer räumlichen Auflösung unterhalb der Beugungsgrenze bestimmbar. Voraussetzung hierfür ist jedoch, dass eine unter statistischen Gesichtspunkten ausreichende Anzahl von Fluoreszenzlichtphotonen den Detektor erreicht. Dies verlängert nicht nur die Messdauer, sondern setzt auch voraus, dass die Fluoreszenzfarbstoffmoleküle überhaupt geeignet sind, eine größere Anzahl von Fluoreszenzlichtphotonen auszusenden, bevor sie in ihren nichtaktivierten Zustand zurückkehren oder in einen weiteren Zustand überführt werden. Hierdurch wird die Anzahl der praktisch verfügbaren aktivierbaren Fluoreszenzfarbstoffe, die grundsätzlich dieselben sein können wie die bei der RESOLFT-Technik eingesetzten schaltbaren Fluoreszenzfarbstoffe, stark eingeschränkt.

Unter dem Stichwort GSDIM ist eine zu PALM inverse Technik bekannt, die mit herkömmlichen Fluoreszenzfarbstoffen auskommt, wobei die Invertierung darin besteht, dass so viele Moleküle des Fluoreszenzfarbstoffs vorübergehend in einen Dunkelzustand deaktiviert werden, dass die verbleibenden fluoreszierenden Fluoreszenzfarbstoffmoleküle einzeln detektierbar sind. Bei dieser Technik werden die Moleküle des Fluoreszenzfarbstoffs jedoch sämtlich vor ihrer eigentlichen Messung hohen Lichtintensitäten ausgesetzt und entsprechend vielen Zustandsänderungen unterworfen, um sie in ihren Dunkelzustand zu überführen und zu ihrem weit überwiegenden Anteil darin zu halten.

Aus der DE 103 25 459 A1 ist ein Verfahren zum Ausbilden einer räumlichen Struktur mit Auflösung jenseits der Beugungsgrenze bekannt, bei dem eine Substanz nur in einem Schreibbereich, der einem Intensitätsminimum eines optischen Signals entspricht, in einem reaktiven Zustand belassen wird und überall außerhalb des Schreibbereichs mit dem optischen Signal in einen nicht reaktiven Zustand überführt und dann in dem Schreibbereich mit einem physikalischen Signal umgewandelt wird. Auch hierbei wird die Substanz bereits bei der Annäherung des Schreibbereichs an einen bestimmten Punkt eines Gebiets sehr hohen Lichtintensitäten ausgesetzt und entsprechend vielen Zustandsänderungen in kurzer Zeit unterworfen.

Ein Verfahren zum Bestimmen der Verteilung einer Substanz in einem Messgebiet mit den Merkmalen des Oberbegriffs des unabhängigen Patentanspruchs 1 und ein Rasterlichtmikroskop mit den Merkmalen des nebengeordneten Patentanspruchs 13 sind aus der DE 10 2005 034 443 A1 bekannt. Hier wird eine lumineszierende Probe ausschließlich mit Anregungsstrahlung einer einzigen Wellenlänge beaufschlagt, um den mit anderen Verfahren zur Verbesserung der räumlichen Auflösung verbundenen Aufwand zu vermeiden. Die Probe wird mit der Anregungsstrahlung aus einem ersten Lumineszenz-Zustand, in dem die Anregbarkeit zur Emission von Lumineszenzstrahlung mit steigender Anregungsstrahlungsleistung bis zu einem Maximalwert steigt, welcher einem Anregungsstrahlungsleistungs-Schwellwert zugeordnet ist, in einen zweiten Lumineszenz-Zustand überführt, in dem die Probe gegenüber dem ersten Zustand verminderte Anregbarkeit zur Emission der Lumineszenzstrahlung aufweist. Durch Einstrahlung von Anregungsstrahlungsleistung oberhalb des Schwellwerts wird die Probe in den zweiten Zustand gebracht. Indem die Einstrahlung von Anregungsstrahlung mit einer Anregungsstrahlungsverteilung erfolgt, die ein örtliches Leistungsmaximum über den Schwellwert und ein örtliches Leistungsminimum unter dem Schwellwert aufweist, wird die Probe in Teil-Bereichen in den ersten Zustand und in angrenzenden Teil-Bereichen in den zweiten Zustand versetzt. Im Ergebnis umfasst das Bild der lumineszierenden Probe Proben-Bereiche im ersten Zustand und Proben-Bereiche im zweiten Zustand, wobei zum Bild der lumineszierenden Probe überwiegend Proben-Bereiche im ersten Zustand beitragen und dadurch das Bild eine gegenüber der Anregungsstrahlungs-Verteilung gesteigerte Ortsauflösung aufweist. Konkret kann eine brennlinienförmige Beleuchtung mit der Anregungsstrahlung angewendet werden, wobei die Linie längs ihrer Längsachse zum Beispiel sinusförmig moduliert ist, so dass die Leistung in Linienabschnitten über dem Schwellwert und in Linienabschnitten unter dem Schwellwert liegt. Eine Scanbewegung erfolgt dann senkrecht zur Linie und entlang der Linie; und der Detektor für die Lumineszenzstrahlung ist ein geeignet hochauflösender Zeilendetektor. Das bekannte Verfahren und die bekannte Vorrichtung sind auf lumineszierende Substanzen angewiesen, die das beschriebene Verhalten in Bezug auf eine ansteigende Anregungsstrahlungsleistung bei einer einzigen Wellenlänge aufweisen. Dies ist weder bei allen Fluoreszenzfarbstoffen noch allen anderen lumineszenten Substanzen noch allen sogenannten schaltbaren Fluoreszenzfarbstoffen, schaltbaren fluoreszierenden Proteinen und aktivierbaren Lumineszenzpartikeln der Fall.

### AUFGABE DER ERFINDUNG

Der Erfindung liegt die Aufgabe zugrunde, ein Verfahren und ein Rasterlichtmikroskop zum räumlich hoch auflösenden Bestimmen der Verteilung einer Substanz in einem Messgebiet aufzuzeigen, bei denen bezüglich der Substanzen möglichst wenig Einschränkungen bestehen. Bei einem Verfahren zum lokalisierten Auslösen einer Umwandlung einer Substanz in einem Umwandlungsgebiet soll die Substanz vor dem Auslösen ihrer Umwandlung mit dem physikalischen Signal möglichst wenigen Zustandsänderungen unterworfen werden.

### LÖSUNG

Die Aufgabe der Erfindung wird durch ein Verfahren zum Bestimmen der Verteilung einer Substanz in einem Messgebiet mit den Merkmalen des unabhängigen Patentanspruchs 1, durch ein Rasterlichtmikroskop mit den Merkmalen des unabhängigen Patentanspruchs 11 und durch ein Verfahren zum lokalisierten Auslösen einer Umwandlung einer Substanz in einem Umwandlungsgebiet mit den Merkmalen des unabhängigen Patentanspruchs 13 gelöst. Bevorzugte Ausführungsformen der neuen Verfahren und des neuen Rasterlichtmikroskops sind in den abhängigen Patentansprüchen definiert.

### BESCHREIBUNG DER ERFINDUNG

Bei dem neuen Verfahren wird zum Bestimmen der Verteilung einer Substanz in einem Messgebiet eine Messfront aus dem jeweiligen optischen Signal und/oder dem jeweiligen weiteren optischen Signal in der Probe ausgebildet, wobei die Intensität des optischen Signals und des weiteren optischen Signals über eine Tiefe der Messfront, die kleiner als die Beugungsgrenze bei der Wellenlänge des optischen Signals und/oder des weiteren optischen Signals ist, derart ansteigt, dass der Anteil der Substanz in dem Messzustand durch Überführen der Substanz (a) aus dem einen Zustand in den Messzustand von zumindest im Wesentlichen nicht vorhanden anwächst und durch Überführen der Substanz (b) in den einen oder den weiteren Zustand wieder auf zumindest im Wesentlichen nicht vorhanden abfällt. Wenn der Anteil der Substanz in dem Messzustand in idealer Form nicht vorhanden ist, beträgt er null. Für das neue Verfahren reicht es aber aus, wenn der Anteil der Substanz in dem Messzustand, der als "nicht vorhanden" bezeichnet wird, nahe bei null liegt oder jedenfalls klein verglichen mit dem maximalen Anteil der Substanz in dem Messzustand innerhalb der Messfront ist.

Die Messfront wird bei den neuen Verfahren in Gegenrichtung zu dem Anstieg der Intensität des optischen Signals und des weiteren optischen Signals über das Messgebiet verschoben, um dieses mit der Messfront abzutasten. Dabei wird das Messsignal oder seine Änderung zumindest aus dem Bereich der Messfront, vorzugsweise eine Verteilung des Messsignals oder seiner Änderung mit Ortsauflösung längs der quer zu dem Anstieg der Intensität des optischen Signals und des weiteren optischen Signals verlaufenden Breitenrichtung der Messfront, erfasst und den jeweils zugehörigen Positionen der Messfront in dem Messgebiet zugeordnet. Das heißt, vorzugsweise wird zu jeder Position der Messfront in dem Messgebiet mindestens eine Verteilung des Messsignals oder seiner Änderung längs der Messfront registriert. Zum Beispiel bei einem Messgebiet mit nur eindimensionaler Ausdehnung kann es aber auch ausreichen, statt einer Verteilung des Messsignals oder seiner Änderung nur eine Intensität des Messsignals oder eine seiner Änderung aus dem Bereich oder aus einzelnen Teilbereichen der Messfront zu erfassen.

Bei dem neuen Verfahren wird die Ortsauflösung beim Bestimmen der Verteilung der Substanz in Richtung des Verschiebens der Messfront insbesondere durch Kenntnis der jeweiligen Lage der Messfront in der Probe erzielt, weil das Messsignal in dem bevorzugten Fall (iii) nur aus dem Bereich der Messfront stammen kann und weil das Messsignal in den beiden anderen Fällen (i) und (ii) nur durch die in die Messfront eintretende Substanz eine nicht vorhersagbare und damit separierbare Änderung erfährt, während eine Ortsauflösung längs der Messfront aus der Analyse der Verteilung des Messsignals erreicht wird. Letztere ist dabei grundsätzlich durch die Beugungsgrenze (bei der Wellenlänge des Messsignals) beschränkt. Die Messfront kann hingegen mit sehr geringer räumlicher Tiefe ausgebildet werden, die die Beugungsgrenze weit unterschreitet, so dass die Ortsauflösung in Richtung des Verschiebens der Messfront bis weit unter die Beugungsgrenze verbessert wird.

Durch unterschiedliches Ausrichten der Messfront gegenüber dem Messgebiet und Verschieben der Messfront über das Messgebiet in verschiedenen Richtungen, insbesondere durch Ausrichten einer geraden Messfront in zueinander orthogonalen Richtungen und durch Verschieben der Messfront jeweils senkrecht zu ihrem Verlauf in den beiden Ausrichtungen kann die interessierende Verteilung der Substanz in dem Messgebiet in allen Richtungen mit einer Ortsauflösung unterhalb der Beugungsgrenze abgebildet werden, auf wenn die Intensitäten aller die Messfront ausbildenden optischen Signale längs der Messfront konstant sind oder jedenfalls keine für die Erhöhung der Ortsauflösung in dieser Richtung nutzbare Strukturierung aufweisen.

Bei dem neuen Verfahren weisen zumindest alle optischen Signale, deren Intensität über der Messfront stark ansteigt, vor der Messfront im Wesentlichen keine Intensität auf, die zu irgendwelchen Zustandsänderungen ausreichend wäre. Die Messfront, in der die Substanz erstmalig gemessen wird, nähert sich also an einen Ort des Messgebiets an, ohne die Substanz an diesem Ort bereits vorher durch vielfache Zustandänderungen zu beanspruchen. Im Idealfall durchläuft die Substanz erstmalig dann Zustandsänderungen, wenn sie von der Messfront erreicht wird.

Zur Ausbildung der Messfront können das optische Signal und das weitere optische Signal senkrecht zum gewünschten Verlauf der Messfront auf eine Linie fokussiert werden. Grundsätzlich kann als Messfront auch der Rand des Fokusbereichs eines oder mehrerer auf einen Punkt fokussierter optischer Signale Verwendung finden. D. h., die Messfront muss keinen geraden Verlauf haben; vorzugsweise ist sie aber gerade. Zum Ausbilden einer geraden Messfront kann beispielsweise eine Zylinderlinse Verwendung finden, die ein in einer Richtung aufgeweitetes Bündel aus parallelen Lichtstrahlen auf eine Gerade fokussiert. Die Verteilung der Intensität des derart fokussierten optischen Signals weist Abmessungen in Querrichtung auf, die die Beugungsgrenze nicht überwinden können. Bei hoher Intensität des optischen Signals weisen jedoch die Ränder der Verteilung der Intensität des Signals eine solche Steilheit auf, dass ein zur Ausbildung einer erfindungsgemäßen Messfront erforderlicher Anstieg der Intensität über eine Strecke weit unterhalb der Beugungsgrenze erfolgt. Dabei sind die sehr hohen Intensitäten des optischen Signals oder des weiteren optischen Signals im an die Messfront angrenzenden Maximum seiner Intensitätsverteilung im Wesentlichen unschädlich, weil die Substanz in dem Messgebiet diesen Intensitäten erst dann ausgesetzt wird und den resultierenden vielfachen Zustandsänderungen erst dann unterworfen wird, nachdem sie von der Messfront überfahren und dabei gemessen wurde.

Eine weitere konkrete Möglichkeit insbesondere eine gerade Messfront auszubilden, ist die Abbildung einer Kante in das Messgebiet. Dabei der Messfront vorlaufende Nebenmaxima der Intensitätsverteilung des bzw. der optischen Signale sind in der Regel unschädlich, da sie entweder nur schwach ausgeprägt und/oder ausreichend weit von dem Intensitätssprung über der Kante entfernt sind, um sie bezüglich ihrer Auswirkungen auf das Messsignal einfach diskriminieren zu können.

Die für die beiden Überführungen der Substanz (a) aus dem einen Zustand in den Messzustand und (b) in den einen oder den weiteren Zustand benötigten beiden optischen Signale werden zur Ausbildung der Messfront gemeinsam geformt. Sie können auch einen leichten Versatz senkrecht zum Verlauf der Messfront, d. h. in Richtung der Tiefe der Messfront, aufweisen, wenn beispielsweise keine vollständige Überlappung sinnvoll ist.

Bei den neuen Verfahren zum Bestimmen der Verteilung der Substanz in dem Messgebiet kann neben der Tatsache, dass die Tiefe der Messfront, aus der das Messsignal stammen kann, auch die relative Intensitätsverteilung des Messsignals von der Substanz zur Ortsauflösung genutzt werden. Die relative Intensitätsverteilung des Messsignals von der Substanz hängt von der Position der Substanz in Tiefenrichtung innerhalb der Messfront ab und steigt typischerweise stetig mit der Intensität des optischen Signals über die Tiefe der Messfront an, bis sie steil abfällt. Hierin ist eine Auflösungsverbesserung zweiter Ordnung zu sehen, während bei dem neuen Verfahren eine Auflösungsverbesserung erster Ordnung dadurch erreicht wird, dass das Messsignal bzw. die Änderung des Messsignals von der Substanz überhaupt nur über die Tiefe der Messfront auftritt.

Das Licht, dessen Intensität über der Tiefe der Messfront ansteigt, weist mindestens zwei optische Signale unterschiedlicher Wellenlänge aufweist, deren Intensitätsverteilungen in dem Messgebiet auf dieselbe Weise strukturiert werden, wobei die Substanz mittels des einen optischen Signals (a) aus dem Zustand, in dem kein Messsignal von ihr erhältlich ist, in den Messzustand überführt wird und mittels des anderen optischen Signals (b) in den einen oder einen weiteren Zustand überführt wird.

Bei dem neuen Verfahren werden zwar optische Signale unterschiedlicher Wellenlängen in der Messfront eingesetzt, um eine größere Bandbreite von Substanzen zur Bereitstellung des Messsignals nutzen zu können. Die optischen Signale werden aber auf dieselbe Weise, insbesondere mit denselben optischen Elementen zur Ausbildung der Messfront geformt oder strukturiert. Sie weisen damit grundsätzlich dieselbe Identitätsverteilungen über der Messfront auf, wenn sich auch ihre absolute Intensität unterscheiden kann. Der Aufwand wächst daher durch das mindestens eine weitere optische Signal einer weiteren Wellenlänge kaum an. Insbesondere müssen nicht, wie bei herkömmlichen STED- oder RESOLFT-Verfahren, verschiedene optische Elemente für die unterschiedliche Strukturierung mehrerer optischer Signale aufeinander ausgerichtet werden. Vielmehr reicht es aus, die optischen Signale unstrukturiert zusammenzufügen und dann gemeinsam zu strukturieren.

Konkret kann bei dem neuen Verfahren, bei dem die Messfront aus mindestens zwei optischen Signalen unterschiedlicher Wellenlänge ausgebildet wird, die Substanz in dem Messzustand Fluoreszenzlicht emittieren und in dem einen oder weiteren Zustand kein Fluoreszenzlicht emittieren, weil der Messzustand ein angeregter Zustand der Substanz ist, aus dem heraus sie spontan Fluoreszenzlicht emittiert, während der eine oder weitere Zustand ein nicht angeregter oder jedenfalls ein Zustand der Substanz ist, aus dem heraus keine Emission von Fluoreszenzlicht erfolgt. In diesem Fall ist dann das eine optische Signal, das die Substanz in den Messzustand überführt, Anregungslicht sein, während das andere optische Signal zum Beispiel sogenanntes STED- oder auch GSD-Licht ist. Alternativ kann die Substanz erst aus dem Messzustand mit Anregungslicht zur Emission von Fluoreszenzlicht anregbar sein und in dem einen oder weiteren Zustand mit dem Anregungslicht nicht zur Emission von Fluoreszenzlicht anregbar sein. Auch hier ist das Fluoreszenzlicht das Messsignal, aber das Anregungslicht muss zusätzlich zu den beiden optischen Signalen, die die Messfront ausbilden, aufgebracht werden. Es kann dabei ebenfalls eine über die Messfront ansteigende Intensität aufweisen und auf dieselbe Weise bzw. mit denselben optischen Elementen wie die beiden anderen optischen Signale strukturiert werden. Es kann aber auch zum Beispiel homogen über das Messgebiet aufgebracht werden. Auch möglich ist es, dass das Anregungslicht dieselbe Wellenlänge wie das eine oder das andere optische Signal aufweist, die bereits in der Messfront vorhanden sind. Dann wird kein zusätzliches Anregungslicht benötigt, sondern das jeweilige optische Signal erfüllt neben der Funktion des Überführens der Substanz in den Messzustand oder in den einen oder weiteren Zustand in der kein Messsignal von der Substanz erhältlich ist, auch die Aufgabe der Anregung der Substanz in dem Messzustand zur Emission von Fluoreszenzlicht.

Wenn die Substanz hinter dem Einflussbereich des Ihre Überführung bewirkenden optischen Signals sehr schnell wieder in ihren Zustand zurückkehrt, in dem Sie vor der Messfront vorliegt, oder wenn die Substanz durch das optische Signal sowieso wieder in diesen Zustand zurück gebracht wird, kann das Messgebiet auch mit mehreren schnell aufeinander folgenden parallelen oder zueinander angewinkelten Messfronten überfahren werden. Wenn die Substanz eine längere Erholungszeit braucht, bevor Sie in ihren Ausgangszustand zurückkehrt, ist diese Erholungszeit vor einem erneuten Überfahren des Messgebiets mit der Messfront abzuwarten, oder eine noch nicht vollständige Erholung der Substanz ist bei der Auswertung des beim erneuten Überfahren der Substanz mit der Messfront erfassten Messsignals zur berücksichtigen. Häufig ist es auch vorteilhaft, wenn die Substanz in dem Messgebiet, über das die Messfront verschoben wurde, mit einem zurücksetzenden oder auffrischenden optischen Signal, insbesondere aus dem blauen oder ultravioletten Wellenlängenbereich, beaufschlagt wird, bevor die Messfront erneut über das Messgebiet verschoben wird. Auf diese Weise kann der Anteil der Substanz in dem einem Zustand, den sie vor dem erstmaligen Überfahren mit der Messfront hatte, oftmals deutlich erhöht werden.

Es ist zu betonen, dass die vorliegende Erfindung nicht nur unter Verwendung von Fluoreszenzfarbstoffen oder anderen Lumineszenzfarbstoffen durchgeführt werden kann. Es reicht vielmehr aus, das die Substanz irgendwelche Leuchtzentren bereitstellt, die in der erfindungsgemäßen Art und Weise in bzw. aus einem Messzustand überführbar sind, wobei nur in dem Messzustand das Messsignal von der Substanz erhältlich ist. Dies bedeutet nicht zwingend, dass in anderen Zuständen der Substanz kein Messsignal von der Probe erhältlich sein darf, solange es nicht dieselbe Intensität hat und/oder dasselbe Messsignal ist wie dasjenige, das von der Substanz innerhalb der erfindungsgemäßen Messfront erhalten wird.

Bei der vorliegenden Erfindung können auch sogenannte schaltbare Fluoreszenzfarbstoffe, schaltbare fluoreszierende Proteine und aktivierbare Lumineszenzpartikel, die mittels eines Schaltsignals von einem Konformationszustand in einen anderen Konformationszustand schaltbar sind, verwendet werden. Dabei können diese beiden Konformationszustände der eine Zustand, d. h. der Ausgangszustand der Substanz vor der Messfront, und Messzustand der Substanz in der Messfront sein, wobei es sich bei dem Messzustand um einen lumineszenzfähigen Konformationszustand handeln kann. Es kann sich bei den beiden Konformationszuständen aber auch um den einen Zustand, d. h. den Ausgangszustand der Substanz vor der Messfront, wobei der Messzustand ein elektronisch angeregter Zustand dieses Konformationszustands ist, und den weiteren Zustand, d. h. einen Dunkelzustand der Substanz hinter der Messfront handeln. In diesen beiden Fällen wird mit einer aufgesteilten Intensitätsverteilung des Schaltsignals die Messfront ausgebildet. Schaltbare Substanzen können aber auch so eingesetzt werden, dass mit einem Einschaltsignal eine relative Grundkonzentration der Substanz in einem zur Lumineszenz anregbaren Zustand in der Probe eingestellt wird, wobei dieses Einschaltsignal von vergleichsweise geringer Intensität der Messfront vorgelagert oder dieser auch überlagert sein kann und an der Ausbildung der Messfront zumindest primär nicht beteiligt ist.

Die Messfront kann bei den neuen Verfahren in Breitenrichtung einen geraden Verlauf aufweisen. Dies ist bevorzugt, aber nicht zwingend. So kann es sich bei der Messfront auch um einen Teil einer Peripherie irgendeiner anderen Intensitätsverteilung als einer solchen mit maximaler Intensität längs einer Geraden handeln.

Vorzugsweise weist die Messfront in Breitenrichtung eine Ausdehnung von einem großen Vielfachen der Beugungsgrenze bei der Wellenlänge des optischen Signals und/oder des weiteren optischen Signals auf. Idealerweise überspannt die Messfront die gesamte Breite des Messgebiets.

Die Messfront kann schrittweise oder kontinuierlich über das Messgebiet verschoben werden, wobei der Übergang zwischen einem schrittweisen und einem kontinuierlichen Verschieben fließend ist. Insbesondere entspricht ein kontinuierlicher Vorschub der Messfront bei gepulsten optischen Signalen unmittelbar einem schrittweisen Vorschub der Messfront.

Vorzugsweise wird das Messsignal aus dem Bereich der Messfront, auch wenn diese kontinuierlich verschoben wird, mit zeitlicher Auflösung erfasst. Dies kann bedeuten, dass zu jeder Position der Messfront in dem Messgebiet mehrere Verteilungen des Messsignals aus dem Bereich der Messfront hintereinander aufgenommen werden. Auch aus dem zeitlichen Verlauf der Verteilung des Messsignals kann auf die Relativlage der das Messsignal bereitstellenden Substanz beispielsweise in Bezug auf eine mittlere Tiefe der Messfront geschlossen werden. Hierdurch wird eine weitere Steigerung der räumlichen Auflösung, mit der die Verteilung der Substanz in der Probe mit dem neuen Verfahren abgebildet wird, realisierbar. Vor allem aber variiert das Signal zu Rauschen-Verhältnis des Messsignals typischerweise mit der Zeit und kann durch Abstimmung des Zeitpunkts der Erfassung der Verteilung des Messsignals optimiert werden. Dazu müssen aber nicht notwendigerweise mehrere Verteilungen des Messsignals aus dem Bereich der Messfront für eine Position der Messfront in dem Messgebiet hintereinander aufgenommen werden, sondern es reicht aus, das Zeitfenster zu optimieren, in dem eine einzige Verteilung des Messsignals nach dem Verschieben der Messfront aufgenommen wird. Man spricht in diesem Zusammenhang auch im Deutschen häufig vom Gaten des Messsignals. Das optimale Gate kann auch in einem automatisierten Prozess gesetzt werden, in dem das Signal-zu-Rauschen-Verhältnis optimiert wird.

Konkret kann die Verteilung des Messsignals aus dem Bereich der Messfront mit einem in Breitenrichtung der Messfront ausgerichteten Zeilendetektor erfasst werden. Ein flächiger Detektor ist nicht erforderlich, wenn auch das Vorhandensein von mindestens zwei in Richtung senkrecht zu der Messfront gestaffelten Messzeilen zusätzliche Vorteile bringen kann. Die Verwendung eines Zeilendetektors statt eines flächigen Detektors bei dem neuen Verfahren ermöglicht ein sehr schnelleres Auslesen der einzelnen Pixel, was im Hinblick auf die gewünschte zeitliche Auflösung der Verteilung der Intensität des Messsignals längs der Messfront günstig ist.

Der Zeilendetektor kann auch mindestens eine gegenüber der Messfront parallel versetzte Messzeile aufweisen. So kann sein zwar grundsätzlich beugungsbegrenzter Empfindlichkeitsbereich beispielsweise so relativ zu der Messfront in dem Messgebiet angeordnet sein, dass er sich überwiegend hinter der Messfront befindet, wo die Substanz in dem Messgebiet kein Messsignal mehr liefert. Dies ist insbesondere dann von Vorteil, wenn die Substanz vor der Messfront ein Nebenmaximum der Intensitätsverteilung des optischen Signals durchläuft. In jedem Fall ist die Lage des Zeilendetektors sinnvoller Weise relativ zu der Lage der Messfront in dem Messgebiet nicht fest sondern justierbar, weil z. B. die Lage der Messfront zu einer Optik zum Ausbilden der Messfront mit der absoluten Intensität der optischen Signale variiert. Die optimale Justage der Relativlage des Zeilendetektors kann auch in einem automatisierten Prozess erfolgen, in dem bspw. das Signal-zu-Rauschen-Verhältnis optimiert wird.

Mit Hilfe einer Schlitzblende vor dem Zeilendetektor oder unter entsprechender Ausnutzung der geringen Abmessungen der Pixel des Zeilendetektors kann die Verteilung des Messsignals aus dem Bereich der Messfront konfokal zu der Messfront erfasst werden, wobei sich die Konfokalität hier auf alle Richtungen senkrecht zu der Messfront bezieht. Hierdurch kann die Auflösung des neuen Verfahrens in z-Richtung, das heißt in Richtung der optischen Achse des Messsignals verbessert werden. Aber auch der Zeilendetektor selbst kann zur konfokalen Erfassung des Messsignals aus dem Messgebiet genutzt werden. Die Schlitzblende kann dann immer noch zum Ausblenden von Streulicht sinnvoll sein.

Zur Verbesserung der Auflösung in z-Richtung sind auch andere grundsätzlich bekannte Techniken bei dem neuen Verfahren anwendbar, wie beispielsweise eine Mehrphotonenanregung eines Fluoreszenzfarbstoffs, das Registrieren des Messsignals über mehrere Objektive, wie beispielsweise in der 4Pi-Fluoreszenzlichtmikroskopie, und dergleichen.

Eine Mehrphotonenanregung eines oder beider im Bereich der Messfront gewünschten Übergänge hat auch den Vorteil einer effektiven Aufsteilung der Übergangswahrscheinlichkeiten in Richtung der Tiefe der Messfront und damit einer Reduzierung der Tiefe der Messfront.

Grundsätzlich ist ein flächiger Detektor auch bei dem neuen Verfahrens einsetzbar.

Es versteht sich, dass die Tiefe der Messfront bei dem neuen Verfahren möglichst nur einen kleinen Bruchteil der Beugungsgrenze bei der Wellenlänge des optischen Signals und/oder des weiteren optischen Signals ausmacht. Ihre Ausdehnung kann sich auf ein Sechzehntel der Beugungsgrenze oder weniger beschränken. Mit kleiner werdender Tiefe der Messfront verbessert sich die Auflösung der erfindungsgemäß erhaltenen Abbildung der interessierenden Struktur.

Da die Substanz bei den neuen Verfahren nur sehr wenige Male mit dem optischen Signal bzw. weiteren optischen Signal beaufschlagt wird, können einerseits sehr empfindliche Substanzen zum Einsatz kommen und andererseits kann das optische Signal bzw. das weitere optische Signal vergleichsweise energiereich, d. h. die Wellenlänge des optischen Signals bzw. des weiteren optischen Signals, die die absolute Höhe der Beugungsgrenze linear beeinflusst, vergleichsweise kurz sein. So kann die Wellenlänge z. B. kürzer als 450 nm oder sogar nicht länger als 400 nm sein und konkret in einem Bereich von 350-400 nm, d. h. am unteren Ende des Bereichs des sichtbaren Lichts, liegen. Licht mit derartigen Wellenlängen ist von leistungsstarken Puls- und Dauerstrichlasern verfügbar. Das neue Verfahren ist aber neben diesen optischen Signalen aus dem UV-Bereich auch mit optischen Signalen aus dem gesamten sichtbaren Bereich bis in den IR-Bereich hinein durchführbar.

Sowohl Puls- als auch Dauerstrichlaser können als Lichtquellen für das optische Signal und das weitere optische Signal bei den neuen Verfahren eingesetzt werden. Das heißt, bei den neuen Verfahren können alle optischen Signale in Form von Pulsen oder mit konstanter Intensität eingesetzt werden. Im Falle von Pulsen sollten diese jedoch verglichen mit der Geschwindigkeit des Verschiebens der Messfront sehr schnell aufeinander abfolgen, um das Messebiet lückenlos zu erfassen.

Das erfindungsgemäße Verfahren zum Bestimmen der Verteilung der Substanz in dem Messgebiet kann nicht nur dazu genutzt werden, eine mit der Substanz markierte Struktur in einer Probe abzubilden, sondern auch zum Auslesen von Information aus einem Datenträger, die in der Verteilung der Substanz codiert ist. Dabei kann die Substanz insbesondere in einer oder mehreren um mindestens die Beugungsgrenze bei der Wellenlänge des Messsignals voneinander beabstandeten Spuren verteilt, zu denen die Messfront quer ausgerichtet wird.

Das erfindungsgemäße Rasterlichtmikroskop weist eine Optik zur Ausbildung einer Messfront aus dem von einer Lichtquelle kommenden optischen Signal und/oder weiteren optischen Signalen auf. Weiterhin ist ein Detektor zu Erfassen der Verteilung des aus dem Bereich der Messfront von der Probe kommenden Messsignals vorgesehen, bei dem es sich vorzugsweise um einen Zeilendetektor handelt.

Bei dem erfindungsgemäßen Verfahren zum lokalisierten Auslösen einer Umwandlung einer Substanz in einem Umwandlungsgebiet wird in dem Umwandlungsgebiet eine Umwandlungsfront aus dem optischen Signal und aus dem weiteren optischen Signal ausgebildet, wobei die Intensität des optischen Signals und des weiteren optischen Signals über eine Tiefe der Umwandlungsfront, die kleiner als die Beugungsgrenze bei der Wellenlänge des optischen Signals und des weiteren optischen Signals ist, von keiner Überführung der Substanz von dem einen nichtreaktiven Zustand in den reaktiven Zustand bis zur vollständigen Überführung von dem reaktiven Zustand in den einen oder den weiteren nichtreaktiven Zustand ansteigt. Diese Umwandlungsfront wird in Gegenrichtung zu dem Anstieg der Intensität des optischen Signals und des weiteren optischen Signals über das Umwandlungsgebiet verschoben; und das physikalische Signal zum Auslösen der Umwandlung in dem reaktiven Zustand wird zumindest auf einen Teilbereich der Umwandlungsfront aufgebracht, wenn sich die Messfront in ausgewählten Positionen in dem Umwandlungsgebiet befindet.

Das physikalische Signals wird vorzugsweise mit Ortsauflösung längs der quer zu dem Anstieg der Intensität des optischen Signals und/oder des weiteren optischen Signals verlaufenden Umwandlungsfront aufgebracht.

Das neue Verfahren zum lokalisierten Auslösen einer Umwandlung einer Substanz in einem Umwandlungsgebiet kann beispielsweise in der Mikrolithographie oder zum lokalisierten Freisetzen von Effektormolekülen verwendet werden. Es kann auch zum Speichern von Informationen genutzt werden, wobei die Umwandlung reversibel oder nichtreversibel sein kann. Zum Speichern von Informationen kann die Substanz in einer oder mehreren um mindestens die Beugungsgrenze bei der Wellenlänge des Messsignals voneinander beabstandeten Spuren verteilt, wobei die Messfront quer zu den Spuren ausgerichtet und das physikalische Signal mit Auflösung zwischen den Spuren aufgebracht wird. Konkret können zum Beispiel 8 Spuren nebeneinander angeordnet sein, um an jeder Position der Messfront ein Byte speichern zu können. In einer oder mehreren zusätzlichen Spuren können Synchronisationssignale für das Wiederauslesen der Informationen geschrieben werden.

Bis auf die hier beschriebenen Besonderheiten kann das neue Verfahren dem entsprechen, was dem Fachmann in der DE 103 25 459 A1, den Mitgliedern der zugehörigen Patentfamilie und in den Dokumenten offenbart ist, die in den Prüfungsverfahren dieser Patentfamilie zitiert wurden, und was auf einem dieser Dokumente aufbauend weiterentwickelt und veröffentlicht wurde. Zu den reaktiven Zuständen der bei dem neuen Verfahren zum lokalisierten Auslösen einer Umwandlung einsetzbaren Substanzen zählen neben Konformationszuständen auch elektronische und chemische Zustände, wobei in dieser gesamten Beschreibung der Begriff "elektronischer Zustand" so weit auszulegen ist, dass er auch einen ionisierten Zustand bezeichnen kann.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die, Vorteile zwingend von erfindungsgemäßen Ausführungsformen erzielt werden müssen so lange diese Kombination unter dass Schwitzbereiche der Ansprüche Patten. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

### KURZBESCHREIBUNG DER FIGUREN

Die Erfindung wird im Folgenden anhand von Ausführungsbeispielen unter Bezugnahme auf die beigefügten Zeichnungen näher erläutert und beschrieben.
- **Fig. 1**: zeigt ein beugungsbegrenztes Intensitätsprofil eines optischen Signals.
- **Fig. 2**: zeigt einen Randbereich des Intensitätsprofils gemäß Fig. 1 bei sehr hoher absoluter Intensität des optischen Signals und eine aus dieser Intensitätsverteilung des optischen Signals resultierende Intensitätsverteilung eines Messsignals.
- **Fig. 3**: ist eine Fig. 2 entsprechende Darstellung für einen Fall, in dem das Messsignal neben dem optischen Signal von einem weiteren optischen Signal abhängt, das ebenfalls eine beugungsbegrenzte Intensitätsverteilung aufweist.
- **Fig.4**: ist eine Fig. 2 entsprechende Darstellung für einen Fall, dass das Messsignal neben dem optischen Signal und dem weitern optischen Signal mit beugungsbegrenzter Intensitätsverteilung mit Hilfe noch eines weiteren optisches Signal generiert wird, das eine homogene Intensitätsverteilung aufweist.
- **Fig. 5 und 6**: skizzieren das Abtasten einer Probe und einer darin enthaltenen interessierenden Struktur mit einer die Intensitätsverteilung gemäß einer der Fig. 1 bis 4 aufweisenden Messfront in zwei zueinander orthogonalen Richtungen.
- **Fig. 7 und 8**: skizzieren ein Lichtrastermikroskop zum Abtasten der Probe mit der Messfront gemäß den Fig. 5 und 6 und zum gleichzeitigen Erfassen des Messsignals aus dem Bereich der Messfront; und
- **Fig. 9**: skizziert die bei der Durchführung des neuen Verfahrens zum Bestimmen der Verteilung eines Fluoreszenzfarbstoffs ausgenutzten elektronischen Zustände des Fluoreszenzfarbstoffs.

### FIGURENBESCHREIBUNG

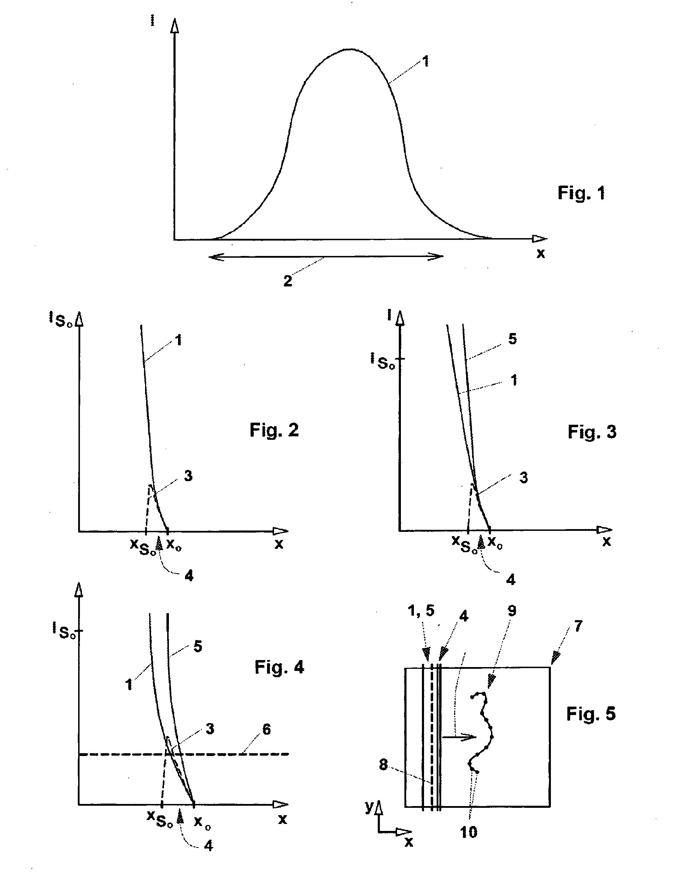

**Fig. 1** ist ein Intensitätsprofil eines beugungsbegrenzten optischen Signals 1. Die Intensitätsverteilung ist Gauß-förmig und über einen Bereich 2 verteilt, dessen minimale Abmessungen durch die Abbesche Beugungsgrenze limitiert sind, welche hier bei etwa der halben Wellenlänge des optischen Signals 1 liegt.
Fig. 2 skizziert den Fall, dass die Intensität des optischen Signals 1 sehr groß ist. Sie steigt damit bereits in der Peripherie der Intensitätsverteilung gemäß Fig. 1, die in Fig. 2 dargestellt ist, sehr schnell an. So wird beispielsweise, wenn das optische Signal 1 Anregungslicht für die Anregung eines Fluoreszenzfarbstoffs zur spontanen Emission von Fluoreszenzlicht ist, sehr schnell nach dem Überschreiten der Intensität von 0 bei x₀ eine Intensität S_{D} bei x_{SD} überschritten, bei der bereits eine Sättigung des vorübergehenden Überführens des Fluoreszenzfarbstoffs in einen Dunkelzustand erreicht ist. Das heißt, nur in dem Bereich zwischen x₀ und x_{SD} wird von dem Fluoreszenzfarbstoff ein Messsignal 3, das heißt im vorliegenden Beispiel Fluoreszenzlicht, erhalten. Dieser Bereich zwischen x₀ und x_{SD} wird hier als Messfront 4 bezeichnet. Die Tiefe der Messfront 4 in Richtung des Intensitätsprofils zwischen x₀ und x_{SD} ist angesichts der sehr hohen Intensitäten des optischen Signals 1 zeitabhängig, das heißt unmittelbar nach dem Aufbringen des optischen Signals 1 kann die Tiefe der Messfront größer sein, weil der Fluoreszenzfarbstoff selbst in Bereichen höherer Intensität des optischen Signals 1 nicht instantan in seinen Dunkelzustand überführt wird, sondern zuvor Fluoreszenzlicht emittiert. Mit der Zeit wird die Tiefe der Messfront schmaler. Dabei geht aber auch die Intensität des Messsignals 3 zurück. Das Messsignal 3 wird daher idealerweise mit zeitlicher Auflösung nach dem Aufbringen des optischen Signals 1 erfasst und dann daraufhin analysiert, zu welchem Zeitpunkt es das beste Signal zu Rauschen-Verhältnis bei gleichzeitig hoher räumlicher Eingrenzung über eine geringe Tiefe der Messfront 4 aufweist.
Fig. 3 skizziert einen Fall, in dem nicht nur ein optisches Signal 1, sondern auch ein weiteres optisches Signal 5 aufgebracht wird, das im Prinzip dieselbe Intensitätsverteilung wie das optische Signal 1 aufweist, aber eine noch höhere absolute Intensität. Konkret kann es sich bei dem weiteren optischen Signal 5 um ein solches handeln, das einen Fluoreszenzfarbstoff gezielt in einen Dunkelzustand überführt, während das optische Signal 1 im Wesentlichen nur zur Anregung des Fluoreszenzfarbstoffs zur Fluoreszenz dient. In diesem Fall bestimmt das Einsetzen des optischen Signals 1 die eine Grenze x₀ der Messfront 4, während die Sättigungsintensität S_{D} des optischen Signals 5, bei der der Fluoreszenzfarbstoff im Wesentlichen vollständig in den Dunkelzustand überführt wird, die andere Grenze x_{SD} der Messfront 4 bestimmt. Dabei gilt in Bezug auf die Dynamik der Breite der Messfront 4 dasselbe, was bereits zu Fig. 2 angemerkt wurde.
Fig. 4 skizziert einen Fall, in dem das optische Signal 1 einen schaltbaren Fluoreszenzfarbstoff in einen zur Fluoreszenz anregbaren Zustand einschaltet, während das weitere optische Signal 5 den Fluoreszenzfarbstoff wieder in seinen ursprünglich oder einen anderen nicht zur Fluoreszenz anregbaren Zustand ausschaltet. Zusätzlich zu den optischen Signalen 1 und 5 wird hier noch ein weiteres optisches Signal 6 in Form von Anregungslicht mit homogener Intensitätsverteilung aufgebracht, das den im eingeschalteten Zustand befindlichen Fluoreszenzfarbstoff zur Fluoreszenz anregt. Auch hieraus ergibt sich eine Verteilung des Messsignals 3 über die Messfront 4, die viel kleinere Abmessungen als die Beugungsgrenze aufweist. Häufig kann jedoch das weitere optische Signal 5 bei schaltbaren Fluoreszenzfarbstoffen sowohl zur Anregung als auch zum Zurückschalten in den ursprünglichen Zustand genutzt werden, so dass auf Anregungslicht in Form des noch weiteren optischen Signals 6 verzichtet werden kann.

Fig. 4 kann auch zur Erläuterung eines Falls dienen, in dem die optischen Signale 1 und 5 grundsätzlich dieselbe Funktion wie in Fig. 3 haben, das heißt dass das optische Signal 1 einen Fluoreszenzfarbstoff zur Fluoreszenz anregt und das optische Signal 5 den Fluoreszenzfarbstoff in einen Dunkelzustand schaltet. In diesem Fall ist dann das optische Signal 6 mit homogener Intensitätsverteilung kein Anregungslicht, sondern ein Einschaltsignal, das einen gewissen Anteil eines in höherer Konzentration vorliegenden einschaltbaren Fluoreszenzfarbstoffs in seinen überhaupt erst fluoreszenzfähigen Zustand überführt. Auch in diesem Fall ergibt sich eine Verteilung des Messsignals 3 nur über die Messfront 4 von gegenüber der Beugungsgrenze deutlich reduzierten Abmessungen.

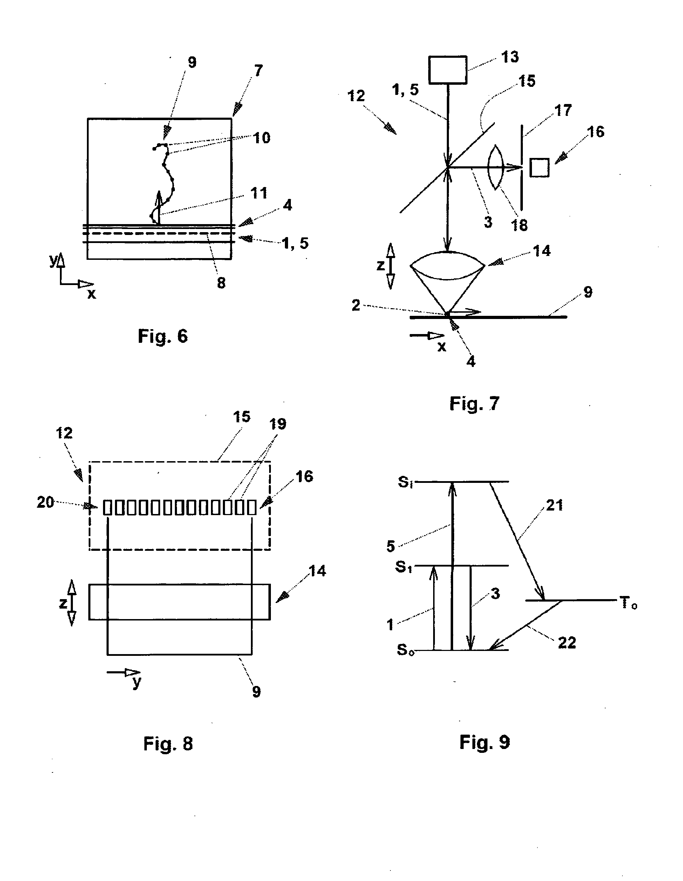

Die Fig. 5 und 6 skizzieren das Abscannen einer Probe 7 als Beispiel für eine Messgebiet in zwei verschiedenen Richtungen x und y mit einer hier geradlinig ausgebildeten Messfront 4, wobei auch die gesamte Intensitätsverteilung der hier verwendeten optischen Signale 1 und 5 gemäß Fig. 3 wiedergegeben ist. Eine gestrichelte Linie 8 deutet das Maximum dieser Intensitätsverteilung an. Eine in der Probe 7 enthaltene interessierende Struktur 9, die mit einer Substanz 10 in Form von Molekülen eines Fluoreszenzfarbstoffs markiert wird, wird durch Registrieren des Fluoreszenzlichts von dem Fluoreszenzfarbstoff als Messsignal abgebildet. Dabei erfolgt das Registrieren des Messsignals mit Ortsauflösung zumindest längs der Messfront 4. Die räumliche Auflösung bei dieser Registrierung ist grundsätzlich beugungsbegrenzt, soweit das Messsignal nicht jeweils nur von einzelnen Molekülen der Substanz 10 über mehrere Pixel erfasst und bezüglich des Schwerpunkts seiner Intensitätsverteilung ausgewertet wird, was grundsätzlich auch bei dem neuen Verfahren möglich ist und hier auch nur in der Richtung längs der Messfront 4 praktiziert werden kann. In Richtung senkrecht zu der Messfront 4, in der diese über die Probe 7 verfahren wird, was durch Pfeile 11 angedeutet ist, erfolgt die Zuordnung des Messsignals zu einem bestimmten Ort der Probe nämlich über die Position der Messfront 4 in der Probe. Da die Ausdehnung der Messfront 4 weit unter die Beugungsgrenze fällt, ist die Auflösung der Abbildung in dieser Richtung viel besser als die Beugungsgrenze. Indem die Probe, wie in den Fig. 5 und 6 angedeutet ist, in zueinander orthogonalen Richtungen x und y mit der Messfront 4 abgetastet wird, kann die interessierende Struktur 9 in beiden Richtungen mit der die Beugungsgrenzen überwindenden Auflösung senkrecht zu der Messfront 4 abgebildet werden.

Das in den **Fig. 7** und 8 skizzierte Fluoreszenzlichtmikroskop 12 zum Messen der Probe 9 gemäß den Fig. 5 und 6 weist eine Lichtquelle 13 auf, die die optische Signale 1 und 5 gemeinsam in Form eines Strahlenbündels mit einem nahezu linienförmigen Querschnitt bereitstellt. Dieses Strahlenbündel wird von einem Objektiv 14 senkrecht zu der Haupterstreckungsrichtung seines Querschnitts in den Bereich 2 fokussiert in dem sich die Intensitätsverteilungen der optischen Signale 1 und 5 gemäß Fig. 3 einstellen. Das in umgekehrter Richtung von der Probe 9 kommende Messsignal 3 wird von einem dichroitischen Spiegel 15 zu einem Zeilendetektor 16 umgelenkt, wobei vor dem Zeilendetektor 16 eine (nur in Fig. 7 eingezeichnete) Schlitzblende 17 angeordnet sein kann, um die Zuordnung des Messsignals in z-Richtung und damit die Auflösung der interessierenden Struktur in z-Richtung zu verbessern. Eine Optik 18 fokussiert das Messsignal 3 in Richtung senkrecht zum Verlauf der Messfront auf die Schlitzblende 17 bzw. den Zeilendetektor 16. Der Zeilendetektor 16 weist mindestens eine Messzeile aus nebeneinander angeordneten Pixeln 19 auf. Es versteht sich, dass deren Wiedergabe in Fig. 8 nicht der Realität entspricht, weil eine viel größere Anzahl von Pixeln 19 in viel dichterer Anordnung in der Messzeile 20 vorgesehen ist. Der Zeilendetektor 16 ist mit hoher Frequenz auslesbar und erlaubt es damit, die bereits im Zusammenhang mit Fig. 2 angesprochene zeitliche Dynamik hinsichtlich der Tiefe der Messfront 4 aufzulösen. Auch die Vorschubgeschwindigkeit der Messfront 4 über die Probe 9 ist ein Parameter, der variiert werden kann, um das Signal zu Rauschen-Verhältnis und die räumliche Auflösung beim Abbilden der Struktur 9 zu optimieren.

Fig. 9 skizziert schematisch, d. h. z. B. ohne Berücksichtigung irgendwelcher Unterzustände, die elektronischen Zustände eines Fluoreszenzfarbstoffs der als Substanz bei dem erfindungsgemäßen Verfahren zum Bestimmen der Verteilung der Substanz in einem Messgebiet genutzt werden kann, wenn die Substanz mittels des optischen Signals 1 (a) aus einem Zustand, in dem kein Messsignal von ihr erhältlich ist, in einen Messzustand und mittels des optischen Signals 5 (b) in einen weiteren Zustand überführbar ist, in dem kein Messsignal mehr von ihr erhältlich ist. Der eine Zustand der Substanz ist der Singlett-Grundzustand So, aus dem heraus mit dem optischen Signal 1 eine Anregung in einen angeregten elektronischen Singlett-Zustand S₁ als Messzustand erfolgen kann. Aus dem Messzustand S₁ emittiert der Fluoreszenzfarbstoff entweder Fluoreszenzlicht als Messsignal 3. Mit dem optischen Signal 5 wird der Fluoreszenzfarbstoff hingegen weiter in einen energetisch höher liegenden elektronischen Zustand angeregt. Dies kann wie hier angedeutet ein Singlett-Zustand Si, aber auch ein angeregter Triplett-Zustand Tᵢ sein. Von dort gelangt der Fluoreszenzfarbstoff durch einen Übergang 21 in einen Dunkelzustand in Form des langlebigen Triplett-Grundzustands T₀, der nur langsam mit einem Übergang 22 wieder in den Singlett-Grundzustand S₀ zerfällt. Bei steigender Intensität des optischen Signals 5 steigt die Wahrscheinlichkeit stark an, dass der Fluoreszenzfarbstoff in den Dunkelzustand T₀ gelangt und darin solange verbleibt, d.h. kein Fluoreszenzlicht als Messsignal mehr emittieren kann, bis sich die Messfront sich längst wieder von dem betrachteten Fluoreszenzfarbstoffmolekül entfernt hat. Alternativ kann der Fluoreszenzfarbstoff mit dem optischen Signal 5 aus dem angeregten elektronischen Singlett-Zustand S₁ ohne Fluoreszenz zurück in seinen Grundzustand S₀ oder in einen Dunkelzustand überführt werden, um mit über einen Sättigungsgrenzwert ansteigender Intensität des optischen Signals 5 die Emission von Fluoreszenzlicht zu vermeiden.

### BEZUGSZEICHENLISTE

- 1: optisches Signal
- 2: Bereich
- 3: Messsignal
- 4: Messfront
- 5: weiteres optisches Signal
- 6: optisches Signal
- 7: Probe
- 8: gestrichelte Linie
- 9: Struktur
- 10: Substanz
- 11: Pfeil
- 12: Rasterlichtmikroskop
- 13: Lichtquelle
- 14: Objektiv
- 15: dichroitischer Spiegel
- 16: Zeilendetektor
- 17: Schlitzblende
- 18: Optik
- 19: Pixel
- 20: Messzeile
- 21: Übergang
- 22: Übergang

## Patentansprüche

1. Verfahren zum Bestimmen der Verteilung einer Substanz (10) in einem Messgebiet, wobei die Substanz (10) mit Licht (a) aus einem Zustand, in dem kein Messsignal (3) von ihr erhältlich ist, in einen Messzustand überführbar ist, in dem ein Messsignal (3) von ihr erhältlich ist, und (b) in den einen oder einen weiteren Zustand überführbar ist, in dem kein Messsignal von ihr erhältlich ist, und wobei das Verfahren die Schritte aufweist:
- Ausbilden einer Messfront (4) aus Licht in dem Messgebiet, wobei die Intensität des Lichts über eine Tiefe der Messfront (4), die kleiner als die Beugungsgrenze bei der Wellenlänge der optischen Signale ist, derart ansteigt, dass der Anteil der Substanz (10) in dem Messzustand durch Überführen der Substanz (10) (a) aus dem einen Zustand in den Messzustand von nicht vorhanden anwächst und durch Überführen der Substanz (10) (b) in den einen oder den weiteren Zustand wieder auf nicht vorhanden abfällt;
- Verschieben der Messfront (4) in Gegenrichtung zu dem Anstieg der Intensität des Lichts über das Messgebiet;
- Erfassen des Messsignals (3) zumindest aus dem Bereich der Messfront (4); und
- Zuordnen des erfassten Messsignals (3) zu zugehörigen Positionen der Messfront (4) in dem Messgebiet,
**dadurch gekennzeichnet, dass** das Licht, dessen Intensität über der Tiefe der Messfront (4) ansteigt, mindestens zwei optische Signale unterschiedlicher Wellenlänge aufweist, deren Intensitätsverteilungen in dem Messgebiet auf dieselbe Weise strukturiert werden, wobei die Substanz (10) mittels des einen optischen Signals (1) (a) aus dem Zustand, in dem kein Messsignal (3) von ihr erhältlich ist, in den Messzustand überführt wird und mittels des anderen optischen Signals (5) (b) in den einen oder den weiteren Zustand überführt wird.

2. Verfahren nach Anspruch 1, **dadurch gekennzeichnet, dass** die Intensitätsverteilungen der beiden optischen Signale in dem Messgebiet mit denselben optischen Elementen strukturiert werden.

3. Verfahren nach einem der vorangehenden Ansprüche, **dadurch gekennzeichnet, dass** die Messfront (4) einen geraden Verlauf aufweist, wobei die Intensität des Lichts, dessen Intensität über der Tiefe der Messfront (4) ansteigt, längs der Messfront (4) konstant ist, und dass die Messfront (4) in mindestens zwei linear unabhängigen Richtungen, insbesondere in zwei orthogonalen Richtungen, über das Messgebiet verschoben und dabei eine Verteilung des Messsignals (3) aus dem Bereich der Messfront (4) mit Ortsauflösung längs der Messfront (4) erfasst und der zugehörigen Positionen der Messfront (4) in dem Messgebiet zugeordnet wird.

4. Verfahren nach einem der vorangehenden Ansprüche, **dadurch gekennzeichnet, dass** die Messfront (4) mindestens das Hundertfache der Beugungsgrenze bei der Wellenlänge des optischen Signals (1) und/oder des weiteren optischen Signals (5) überspannt und/oder dass die Messfront (4) ein zweidimensionales Messgebiet in Breitenrichtung überspannt.

5. Verfahren nach einem der vorangehenden Ansprüche, **dadurch gekennzeichnet, dass** das Messsignals (3) zu jeder Position der Messfront (4) in dem Messgebiet mit zeitlicher Auflösung erfasst wird.

6. Verfahren nach einem der vorangehenden Ansprüche, **dadurch gekennzeichnet, dass** die Verteilung des Messsignals (3) aus dem Bereich der Messfront (4) mit einem in Breitenrichtung der Messfront (4) ausgerichteten Zeilendetektor (16) und/oder aus dem Bereich des gesamten Messgebiets (4) mit einem Detektorarray erfasst wird.

7. Verfahren nach einem der vorangehenden Ansprüche, **dadurch gekennzeichnet, dass** die Intensität des optischen Signals (1) und des weiteren optischen Signals (5) über eine Tiefe der Messfront (4), die kleiner als die Hälfte, insbesondere kleiner oder gleich eines Viertels, noch mehr bevorzugt kleiner oder gleich eines Achtels und am Meisten bevorzugt kleiner oder gleich eines Sechzehntels der Beugungsgrenze bei der Wellenlänge des optischen Signals (1) und/oder des weiteren optischen Signals (5) ist, von keiner Überführung der Substanz (10) von dem einen Zustand in den Messzustand bis zur vollständigen Überführung von dem Messzustand in den einen oder den weiteren Zustand ansteigt.

8. Verfahren nach mindestens einem der vorangehenden Ansprüche, **dadurch gekennzeichnet, dass** die Substanz in dem Messzustand Fluoreszenzlicht emittiert und in dem einem oder weiteren Zustand kein Fluoreszenzlicht emittiert oder dass die Substanz aus dem Messzustand mit Anregungslicht zur Emission von Fluoreszenzlicht anregbar ist und in dem einen oder weiteren Zustand mit dem Anregungslicht nicht zur Emission von Fluoreszenzlicht anregbar ist, wobei das Fluoreszenzlicht jeweils das Messsignal ist.

9. Verfahren nach mindestens einem der vorangehenden Ansprüche, **dadurch gekennzeichnet, dass** die Substanz (10) in dem Messgebiet, über das die Messfront (4) verschoben wurde, mit einem rücksetzenden optischen Signal, insbesondere aus dem blauen oder ultravioletten (UV) Wellenlängenbereich, beaufschlagt wird, bevor die Messfront (4) erneut über das Messgebiet verschoben wird.

10. Verfahren nach einem der vorangehenden Ansprüche, **dadurch gekennzeichnet, dass** mit der Bestimmung der Verteilung der Substanz eine Information aus einem Datenträger ausgelesen wird, wobei dann, wenn die Substanz in einer oder mehreren um mindestens die Beugungsgrenze bei der Wellenlänge des Messsignals voneinander beabstandeten Spuren verteilt ist, die Messfront quer zu den Spuren ausgerichtet wird.

11. Rasterlichtmikroskop zum Bestimmen der Verteilung einer Substanz (10) in einem Messgebiet, wobei die Substanz (10) mit Licht (a) aus einem Zustand, in dem kein Messsignal (3) von ihr erhältlich ist, in einen Messzustand überführbar ist, in dem ein Messsignal (3) von ihr erhältlich ist, und (b) in den einen oder einen weiteren Zustand überführbar ist, in dem kein Messsignal von ihr erhältlich ist,
- mit einer Lichtquelle zur Bereitstellung des Lichts,
- mit einer Optik zum Ausbilden einer Messfront aus dem Licht in dem Messgebiet, wobei die Intensität des Lichts über eine Tiefe der Messfront (4), die kleiner als die Beugungsgrenze bei der Wellenlänge der optischen Signale ist, derart ansteigt, dass der Anteil der Substanz (10) in dem Messzustand durch Überführen der Substanz (10) (a) aus dem einen Zustand in den Messzustand von nicht vorhanden anwächst und durch Überführen der Substanz (10) (b) in den einen oder den weiteren Zustand wieder auf nicht vorhanden abfällt,
- mit Mitteln zum Verschieben der Messfront in Gegenrichtung zu dem Anstieg der Intensität des Lichts über das Messgebiet und
- mit Mitteln zum Erfassen der Verteilung des Messsignals (3) zumindest aus dem Bereich der Messfront mit Ortsauflösung längs der Messfront,
**dadurch gekennzeichnet, dass** das Licht von der Lichtquelle mindestens zwei optische Signale unterschiedlicher Wellenlänge aufweist, deren Intensitätsverteilungen in dem Messgebiet mit denselben optischen Elementen der Optik strukturiert werden, wobei das eine optische Signal (1) die Substanz (10) (a) aus dem Zustand, in dem kein Messsignal (3) von ihr erhältlich ist, in den Messzustand überführt und das andere optischen Signal (5) die Substanz (10) (b) in den einen oder den weiteren Zustand überführt.

12. Rasterlichtmikroskop nach Anspruch 11, **dadurch gekennzeichnet, dass** die Mittel zum Erfassen der Verteilungen des Messsignals aus dem Bereich der Messfront (4) einen Zeilendetektor (16) aufweisen.

13. Verfahren zum lokalisierten Auslösen einer Umwandlung einer Substanz in einem Umwandlungsgebiet, wobei die Substanz (10) mittels eines optischen Signals (1) (a) aus einem nichtreaktiven Zustand, in dem die Umwandlung mit einem physikalischen Signal nicht auslösbar ist, in einen reaktiven Zustand überführbar ist, in dem die Umwandlung mit dem physikalischen Signal auslösbar ist, und mittels eines anderen optischen Signals (5) (b) in den einen oder einen weiteren nichtreaktiven Zustand überführbar ist, und wobei das Verfahren die Schritte aufweist:
- Ausbilden einer Umwandlungsfront (4) aus dem optischen Signal (1) und aus dem weiteren optischen Signal (5) in dem Umwandlungsgebiet, wobei die Intensitätsverteilungen der beiden optischen Signale in dem Umwandlungsgebiet auf dieselbe Weise und/oder mit denselben optischen Elementen strukturiert werden wobei die Intensität des optischen Signals (1) und des weiteren optischen Signals (5) über eine Tiefe der Umwandlungsfront (4), die kleiner als die Beugungsgrenze bei der Wellenlänge des optischen Signals (1) und des weiteren optischen Signals (5) ist, derart ansteigt, dass der Anteil der Substanz in dem reaktiven Zustand durch Überführen der Substanz (10) mittels des optischen Signals (1) (a) aus dem einen nichtreaktiven Zustand in den reaktiven Zustand von nicht vorhanden anwächst und durch Überführen der Substanz (10) mittels des anderen optischen Signals (5) (b) in den einen oder den weiteren nichtreaktiven Zustand wieder auf nicht vorhanden abfällt;
- Verschieben der Umwandlungsfront (4) in Gegenrichtung zu dem Anstieg der Intensität des optischen Signals (1) und/oder des weiteren optischen Signals (5) über das Umwandlungsgebiet;
- Aufbringen des physikalischen Signals (3) zumindest auf einen Teilbereich der Umwandlungsfront (4), wenn sich die Messfront in ausgewählten Positionen in dem Umwandlungsgebiet befindet.

14. Verfahren nach Anspruch 13, **dadurch gekennzeichnet, dass** das physikalische Signals (3) mit Ortsauflösung längs der quer zu dem Anstieg der Intensität des optischen Signals (1) und des weiteren optischen Signals (5) verlaufenden Umwandlungsfront (4) aufgebracht wird.

15. Verfahren nach einem der Ansprüche 13 und 14 zum Speichern von Informationen, wobei die Substanz in einer oder mehreren um mindestens die Beugungsgrenze bei der Wellenlänge des physikalischen Signals voneinander beabstandeten Spuren verteilt ist, **dadurch gekennzeichnet, dass** die Messfront quer zu den Spuren ausgerichtet und das physikalische Signal mit Auflösung zwischen den Spuren aufgebracht wird.

## Claims

1. Method of determining the distribution of a substance (10) in a measurement region, wherein the substance (10), by means of light, is transferable (a) out of one state in which no measurement signal (3) is available from it into a measurement state in which a measurement signal (3) is available from it, and (b) into the one or a further state in which no measurement signal is available from it, and wherein the method comprises the steps:
- forming a measurement front (4) of light in the measurement region, wherein the intensity of the light, over a depth of the measurement front (4) which is smaller than the diffraction limit at the wavelength of the optical signals, increases in such a way that the portion of the substance (10) in the measurement state, due to transferring the substance (10) (a) out of the one state into the measurement state, rises from not existing and, due to transferring the substance (10) (b) into the one or the further state, declines again to not existing;
- moving the measurement front (4) over the measurement region in a direction opposite to the increase of the intensity of the light;
- recording at least the measurement signal (3) coming out of the area of the measurement front (4); and
- assigning the recorded measurement signal (3) to the corresponding position of the measurement front (4) in the measurement region,
**characterised in that** the light whose intensity increases over the depth of the measurement front (4) comprises at least two optical signals of different wavelengths, whose intensity distributions in the measurement region are structured in a same way, wherein the substance (10) is transferred (a) out of the state in which no measurement signal (3) is available from it into the measurement state by means of the one optical signal (1), and (b) into the one or the further state by means of the other optical signal (5).

2. Method according to claim 1, **characterised in that** the intensity distributions of the two optical signals in the measurement region are structured by means of the same optical elements.

3. Method according to any of the preceding claims, **characterised in that** the measurement front (4) has a straight course, wherein the intensity of the light whose intensity increases over the depth of the measurement front (4) is constant along the measurement front (4), and **in that** the measurement front (4) is moved over the measurement region in at least two linearly independent directions, particularly in two orthogonal directions, wherein a distribution of the measurement signal (3) out of the area of the measurement front (4) is recorded with spatial resolution along the measurement front (4) and assigned to the corresponding position of the measurement front (4) in the measurement region.

4. Method according to any of the preceding claims, **characterised in that** the measurement front (4) extends over at least hundred times the diffraction limit at the wavelength of the optical signal (1) and/or the further optical signal (5), and/or **in that** the measurement front (4) extends over a two-dimensional measurement region in width direction.

5. Method according to any of the preceding claims, **characterised in that**, for each position of the measurement front (4) in the measurement region, the measurement signal (3) is recorded with temporal resolution.

6. Method according to any of the preceding claims, **characterised in that** the distribution of the measurement signal (3), out of the area of the measurement front (4), is recorded by means of a line detector (16) aligned in width direction of the measurement front (4), and/or, out of the area of the entire measurement region (4), by means of a detector array.

7. Method according to any of the preceding claims, **characterised in that** the intensity of the optical signal (1) and the further optical signal (5), over a depth of the measurement front (4) which is smaller than a half of, particularly smaller than or equal to a quarter and even more particularly smaller than or equal to the an eighth part and most preferably smaller than or equal to the a sixteenth part of the diffraction barrier at the wavelength of the optical signal (1) and/or the further optical signal (5), increases from no transfer of the substance (10) out of the one state into the measurement state up to a complete transfer out of the measurement state into the one or the further state.

8. Method according to at least one of the preceding claims, **characterised in that** the substance, in the measurement state, emits fluorescence light and, in the one or further state, emits no fluorescence light, or **in that** the substance, out of the measurement state, can be excited for the emission of fluorescence light by means of excitation light and, in the one or further state, can not be excited for the emission of fluorescence light by means the excitation light, wherein the fluorescence light is the measurement signal.

9. Method according to at least one of the preceding claims, **characterised in that** the substance (10) in the measurement region over which the measurement front (4) has been moved is subjected to a resetting optical signal, particularly of a blue or ultraviolet (UV) wavelength range, before the measurement front (4) is once gain moved over the measurement region.

10. Method according to any of the preceding claims, **characterised in that**, by means of determining the distribution of the substance, an information is read out of a data carrier, wherein, if the substance is distributed in one or more tracks arranged at a distance of at least the diffraction barrier at the wavelength of the measurement signal, the measurement front is oriented orthogonal to the tracks.

11. Scanning light microscope for determining the distribution of a substance (10) in a measurement region, wherein the substance (10), by means of light, is transferable (a) out of a state in which no measurement signal (3) is available from it into a measurement state in which the measurement signal (3) is available from it, and (b) into the one or a further state in which no measurement signal is available from it,
- comprising a light source for providing the light,
- comprising an optic for forming a measurement front out of the light in the measurement region, wherein the intensity of the light over a depth of the measurement front (4) which is smaller than the diffraction barrier at the wavelength of the optical signal increases in such a way that the portion of the substance (10) in the measurement state, due to transferring the substance (10) (a) out of the one state into the measurement state, rises from not existing and, due to transferring the substance (10) (b) into the one or the further state, devlines again to not existing,
- comprising means for moving the measurement front over the measurement region in opposite direction to the increase of the intensity of the light, and
- comprising means for recording at least the distribution of the measurement signal (3) coming out of the area of the measurement front with spatial resolution along the measurement front,
**characterised in that** the light of the light source comprises at least two optical signals of different wavelengths whose intensity distributions in the measurement region are structured by means of the same optical elements of the optic, wherein the one optical signal (1) transfers the substance (10) (a) out of the state in which no measurement signal (3) is available from it into the measurement state, and the other optical signal (5) transfers the substance (10) (b) into the one or the further state.

12. Scanning light microscope according to claim 11, **characterised in that** the means for recording the distributions of the measurement signal out of the area of the measurement front (4) comprise a line detector (16).

13. Method of locally initiating a conversion of a substance in a conversion region, wherein the substance (10) is transferable, by means of the optical signal (1), (a) out of a non-reactive state in which the conversion can not be initiated by a physical signal into a reactive state in which the conversion can be initiated by the physical signal, and, by means of another optical signal (5), (b) in the one or a further non-reactive state, wherein the method comprises the steps:
- forming a conversion front (4) of the optical signal (1) and of a further optical signal (5) in the conversion region, wherein the intensity distributions of the two optical signals in the conversion region are structured in the same way and/or by means of the same optical elements, wherein the intensity of the optical signal (1) and of the further optical signal (5), over a depth of the conversion front (4) which is smaller than the diffraction barrier at the wavelength of the optical signal (1) and the further optical signal (5), increases in such a way that the portion of the substance in the reactive state, due to transferring the substance (10) by means of the optical signal (1) (a) out of the non-reactive state into the reactive state, rises from non-existing and, due to transferring the substance (10) by means of the other optical signal (5) (b) into the one or the further non-reactive state, declines again to non-existing;
- moving the conversion front (4) over the conversion region in opposite direction to the increase of the intensity of the optical signal (1) and/or the further optical signal (5);
- applying the optical signal (3) at least to a partial area of the conversion front (4), when the conversion front is in selected positions within the conversion region.

14. Method according to claim 13, **characterised in that** the physical signal (3) is applied with spatial resolution along the conversion front (4) which runs orthogonal to the increase of the intensity of the optical signal (1) and the further optical signal (5).

15. Method according to any of the claims 13 and 14 for storing information, wherein the substance is distributed in one or more tracks arranged at a distance of at least the diffraction barrier at the wavelength of the physical signal, **characterised in that** the measurement front is oriented orthogonal to the tracks, and **in that** the physical signal is applied with resolution between the tracks.

## Revendications

1. Procédé de détermination de la distribution d'une substance (10) dans un champ de mesure, la substance (10) pouvant être transférée avec de la lumière (a) d'un état auquel aucun signal de mesure (3) ne peut être obtenu à partir de celle-ci à un état de mesure, auquel un signal de mesure (3) peut être obtenu à partir de celle-ci, et pouvant être transférée (b) à l'état ou à un autre état auquel aucun signal de mesure de peut être obtenu à partir de celle-ci, et le procédé comprenant les étapes suivantes:
- la formation d'un front de mesure (4) à partir de la lumière dans le champ de mesure, l'intensité de la lumière augmentant sur une profondeur du front de mesure (4), qui est inférieure à la limite de diffraction à la longueur d'onde des signaux optiques, de manière à ce que la proportion de la substance (10) à l'état de mesure augmente à partir de non présente par transfert de la substance (10) (a) de l'état vers l'état de mesure, et diminue de nouveau à non présente par transfert de la substance (10) (b) à l'état ou à l'autre état;
- le décalage du front de mesure (4) dans la direction opposée à l'augmentation de l'intensité de la lumière dans le champ de mesure;
- l'enregistrement du signal de mesure (3) au moins dans la zone du front de mesure (4); et
- l'attribution du signal de mesure (3) enregistré aux positions correspondantes du front de mesure (4) dans le champ de mesure, **caractérisé en ce que** la lumière dont l'intensité augmente sur la profondeur du front de mesure (4) comprend au moins deux signaux optiques de longueur d'onde différente, dont les distributions d'intensité dans le champ de mesure sont structurées de la même manière, la substance (10) étant transférée au moyen d'un signal optique (1) (a) de l'état auquel aucun signal de mesure (3) ne peut être obtenu à partir de celle-ci à l'état de mesure, et transférée au moyen de l'autre signal optique (5) (b) à l'état ou l'autre état.

2. Procédé selon la revendication 1, **caractérisé en ce que** les distributions d'intensité des deux signaux optiques dans le champ de mesure sont structurées avec les mêmes éléments optiques.

3. Procédé selon l'une quelconque des revendications précédentes, **caractérisé en ce que** le front de mesure (4) présente une trajectoire droite, l'intensité de la lumière, dont l'intensité augmente sur la profondeur du front de mesure (4), étant constante le long du front de mesure (4), et **en ce que** le front de mesure (4) est décalé dans au moins deux directions linéaires indépendantes, notamment dans deux directions orthogonales, dans le champ de mesure, et une distribution du signal de mesure (3) dans la zone du front de mesure (4) avec résolution spatiale le long du front de mesure (4) est enregistrée, et attribuée aux positions correspondantes du front de mesure (4) dans le champ de mesure.

4. Procédé selon l'une quelconque des revendications précédentes, **caractérisé en ce que** le front de mesure (4) s'étend sur au moins cent fois la limite de diffraction à la longueur d'onde du signal optique (1) et/ou de l'autre signal optique (5) et/ou **en ce que** le front de mesure (4) s'étend sur un champ de mesure bidimensionnel dans la direction de la largeur.

5. Procédé selon l'une quelconque des revendications précédentes, **caractérisé en ce que** le signal de mesure (3) est enregistré à chaque position du front de mesure (4) dans le champ de mesure avec résolution temporelle.

6. Procédé selon l'une quelconque des revendications précédentes, **caractérisé en ce que** la distribution du signal de mesure (3) est enregistrée dans la zone du front de mesure (4) avec un détecteur de lignes (16) agencé dans la direction de la largeur du front de mesure (4) et/ou dans la zone de l'ensemble du champ de mesure (4) avec un réseau de détecteurs.

7. Procédé selon l'une quelconque des revendications précédentes, **caractérisé en ce que** l'intensité du signal optique (1) et de l'autre signal optique (5) augmente sur une profondeur du front de mesure (4) qui est inférieure à la moitié, notamment inférieure ou égale à un quart, de manière encore davantage préférée inférieure ou égale à un huitième et de manière préférée entre toutes inférieure ou égale à un seizième de la limite de diffraction à la longueur d'onde du signal optique (1) et/ou de l'autre signal optique (5), depuis aucun transfert de la substance (10) de l'état en l'état de mesure jusqu'au transfert total de l'état de mesure en l'état ou l'autre état.

8. Procédé selon au moins l'une quelconque des revendications précédentes, **caractérisé en ce que** la substance émet une lumière fluorescente à l'état de mesure et n'émet pas de lumière fluorescente à l'état ou l'autre état, ou **en ce que** la substance peut être excitée à l'état de mesure avec une lumière d'excitation pour l'émission d'une lumière fluorescente, et ne peut pas être excitée à l'état ou l'autre état avec la lumière d'excitation pour l'émission d'une lumière fluorescente, la lumière fluorescente étant à chaque fois le signal de mesure.

9. Procédé selon au moins l'une quelconque des revendications précédentes, **caractérisé en ce que** la substance (10) est exposée à un signal optique de réinitialisation, notamment dans la plage de longueurs d'onde bleue ou ultraviolette (UV), dans le champ de mesure, dans lequel le front de mesure (4) a été décalé, avant un nouveau décalage du front de mesure (4) dans le champ de mesure.

10. Procédé selon l'une quelconque des revendications précédentes, **caractérisé en ce qu'une** information est lue à partir d'un support de données avec la détermination de la distribution de la substance, le front de mesure étant orienté perpendiculairement aux traces lorsque la substance est distribuée dans une ou plusieurs traces espacées les unes des autres d'au moins la limite de diffraction à la longueur d'onde du signal de mesure.

11. Microscope optique à balayage pour la détermination de la distribution d'une substance (10) dans un champ de mesure, la substance (10) pouvant être transférée avec de la lumière (a) d'un état auquel aucun signal de mesure (3) ne peut être obtenu à partir de celle-ci à un état de mesure, auquel un signal de mesure (3) peut être obtenu à partir de celle-ci, et pouvant être transférée (b) à l'état ou à un autre état auquel aucun signal de mesure de peut être obtenu à partir de celle-ci,
- comprenant une source de lumière pour la mise à disposition de la lumière,
- comprenant un système optique pour la formation d'un front de mesure à partir de la lumière dans le champ de mesure, l'intensité de la lumière augmentant sur une profondeur du front de mesure (4), qui est inférieure à la limite de diffraction à la longueur d'onde des signaux optiques, de manière à ce que la proportion de la substance (10) à l'état de mesure augmente à partir de non présente par transfert de la substance (10) (a) de l'état vers l'état de mesure, et diminue de nouveau à non présente par transfert de la substance (10) (b) à l'état ou à l'autre état;
- comprenant des moyens pour le décalage du front de mesure dans la direction opposée à l'augmentation de l'intensité de la lumière dans le champ de mesure et
- comprenant des moyens pour l'enregistrement de la distribution du signal de mesure (3) au moins dans la zone du front de mesure avec résolution spatiale le long du front de mesure,
**caractérisé en ce que** la lumière de la source de lumière comprend au moins deux signaux optiques de longueur d'onde différente, dont les distributions d'intensité dans le champ de mesure sont structurées avec les mêmes éléments optiques, le signal optique (1) transférant la substance (10) (a) de l'état auquel aucun signal de mesure (3) ne peut être obtenu à partir de celle-ci à l'état de mesure, et l'autre signal optique (5) transférant la substance (10) (b) à l'état ou l'autre état.

12. Microscope optique à balayage selon la revendication 11, **caractérisé en ce que** les moyens pour l'enregistrement des distributions du signal de mesure dans la zone du front de mesure (4) comprennent un détecteur de lignes (16).

13. Procédé de déclenchement localisé d'une transformation d'une substance dans un champ de transformation, la substance (10) pouvant être transférée au moyen d'un signal optique (1) (a) d'un état non réactif auquel la transformation ne peut pas être déclenchée avec un signal physique, à un état réactif, auquel la transformation peut être déclenchée avec le signal physique, et pouvant être transférée au moyen d'un autre signal optique (5) (b) à l'état ou à un autre état non réactif, et le procédé comprenant les étapes suivantes:
- la formation d'un front de transformation (4) à partir du signal optique (1) et de l'autre signal optique (5) dans le champ de transformation, les distributions d'intensité des deux signaux optiques dans le champ de transformation étant structurées de la même manière et/ou avec les mêmes éléments optiques, l'intensité du signal optique (1) et de l'autre signal optique (5) augmentant sur une profondeur du front de transformation (4), qui est inférieure à la limite de diffraction à la longueur d'onde du signal optique (1) et de l'autre signal optique (5), de manière à ce que la proportion de la substance à l'état réactif augmente à partir de non présente par transfert de la substance (10) au moyen du signal optique (1) (a) de l'état non réactif vers l'état réactif, et diminue de nouveau à non présente par transfert de la substance (10) au moyen de l'autre signal optique (5) (b) vers l'état ou l'autre état non réactif;
- le décalage du front de transformation (4) dans la direction opposée à l'augmentation de l'intensité du signal optique (1) et/ou de l'autre signal optique (5) dans le champ de transformation;
- l'application du signal physique (3) au moins sur une partie du front de transformation (4) lorsque le front de mesure se trouve à des positions choisies dans le champ de transformation.

14. Procédé selon la revendication 13, **caractérisé en ce que** le signal physique (3) est appliqué avec résolution spatiale le long du front de transformation (4) perpendiculaire à l'augmentation de l'intensité du signal optique (1) et de l'autre signal optique (5).

15. Procédé selon l'une quelconque des revendications 13 et 14 pour le stockage d'informations, la substance étant distribuée dans une ou plusieurs traces espacées les unes des autres d'au moins la limite de diffraction à la longueur d'onde du signal physique, **caractérisé en ce que** le front de mesure est perpendiculaire aux traces et le signal physique est appliqué avec résolution entre les traces.
